# EUROPÄISCHE PATENTSCHRIFT

(11) **EP 3 401 130 B1**
(45) Veröffentlichungstag und Bekanntmachung des Hinweises auf die Patenterteilung: **01.05.2019**
(21) Anmeldenummer: 18167423.5
(22) Anmeldetag: 16.04.2018
(51) Int. Cl.: B60D 1/06

(54) **KUGELKOPFKUPPLUNG FÜR FAHRZEUGANHÄNGER**
BALL-SHAPED HEAD COUPLING FOR VEHICLE TRAILERS
ACCOUPLEMENT À ROTULE POUR REMORQUES DE VÉHICULES

(30) Priorität: 25.04.2017 DE 202017102412 U
(43) Veröffentlichungstag der Anmeldung: 14.11.2018
(73) Patentinhaber: Knott GmbH, D-83125 Eggstätt (DE)
(72) Erfinder: STRASSER, Josef, 83257 Gstadt am Chiemsee (DE)
(74) Vertreter: Flach Bauer Stahl Patentanwälte Partnerschaft mbB

(56) Entgegenhaltungen:
- EP-A2- 2 070 736
- DE-A1- 3 425 804
- DE-C1- 10 209 866

## Beschreibung

Die Erfindung betrifft eine Kugelkopfkupplung für Fahrzeuganhänger gemäß dem Oberbegriff des Anspruches 1.

Eine derartige Kugelkopfkupplung ist aus der DE 102 09 866 C1 bekannt. Diese bekannte Kugelkopfkupplung weist ein Kupplungsgehäuse und ein Kupplungselement auf, das beweglich im Kupplungsgehäuse gelagert und zum Halten der Kugelkopfkupplung am Kugelkopf ausgebildet ist. Mit dem Kupplungselement wirkt ein Steuerhebel zusammen, welcher das Kupplungselement in der Verschlussposition verriegelt. Der Steuerhebel ist schwenkbar am Kupplungsgehäuse gehaltert und mittels eines mit dem Steuerhebel gekoppelten Handhebels betätigbar. Weiterhin wird bei dieser bekannten Kugelkopfkupplung das Kupplungselement in der Verschlussposition des Handhebels mittels einer elastischen Vorspanneinrichtung in der Form von Druckfedern, die über den Handhebel auf den Steuerhebel einwirken, in seine Verschlussposition gedrängt. Ein Abschnitt des Handhebels bildet zusammen mit dieser Vorspanneinrichtung eine manuell betätigbare Kniehebeleinrichtung, mit der das Kupplungselement mit einer bestimmten Kraft gegen den Kugelkopf gepresst werden kann. Mit Hilfe der hierdurch erzeugten Reibkraft zwischen Kugelkopf und Kugelkopfkupplung können Schlingerbewegungen des Fahrzeuganhängers verringert werden.

Nachteilig ist bei dieser bekannten Kugelkopfkupplung, dass die Reibkräfte zwischen der Kugelkopfkupplung und dem Kugelkopf aufgrund eines Verschleißes der Reibbeläge, die üblicherweise auf der Innenseite des Kupplungselements und des Kupplungsgehäuses angeordnet sind, abnehmen. Es ist daher nicht möglich, gleichbleibende Reibkräfte über eine längere Nutzungsdauer aufrechtzuerhalten. Darüber hinaus muss der Handhebel mit relativ hoher Kraft betätigt werden, wenn eine Vorspanneinrichtung mit hoher Federkraft verwendet wird, um hohe Zuspannkräfte und damit Reibkräfte zu erzeugen.

Der Erfindung liegt von daher die Aufgabe zugrunde, eine Kugelkopfkupplung zu schaffen, die auf besonders einfache Weise betätigbar ist und mit der konstante Zuspannkräfte über eine lange Benutzungszeit aufrechterhalten werden können.

Diese Aufgabe wird erfindungsgemäß durch eine Kugelkopfkupplung mit den Merkmalen des Anspruches 1 gelöst. Vorteilhafte Ausführungsformen der Erfindung sind in den weiteren Ansprüchen beschrieben.

Die erfindungsgemäße Kugelkopfkupplung weist ein Kupplungsgehäuse und ein Kupplungselement auf, das beweglich im Kupplungsgehäuse gelagert und zum Halten der Kugelkopfkupplung am Kugelkopf ausgebildet ist. Weiterhin ist ein mit dem Kupplungselement zusammenwirkender Steuerhebel zum Verriegeln des Kupplungselements in einer Verschlussposition vorgesehen, wobei der Steuerhebel schwenkbar am Kupplungsgehäuse gehaltert ist. Zum Betätigen des Steuerhebels ist eine Kniehebeleinrichtung vorgesehen, die einen ersten Kniehebelarm, der gelenkig mit dem Steuerhebel verbunden ist, und einen zweiten Kniehebelarm aufweist, der gelenkig am Kupplungsgehäuse oder einem damit fest verbundenen Teil abgestützt ist. Ferner ist ein Handhebel zum Betätigen der Kniehebeleinrichtung vorgesehen. Erfindungsgemäß weist die Kugelkopfkupplung ferner eine in die Kniehebeleinrichtung integrierte motorische Zuspanneinrichtung zum Zuspannen der Kugelkopfkupplung auf.

Mit Hilfe der in die Kniehebeleinrichtung integrierten motorischen Zuspanneinrichtung kann die Kugelkopfkupplung auf sehr einfache Weise mit einer vorbestimmten Zuspannkraft an den Kugelkopf angedrückt werden, um eine bestimmte Reibkraft zu erzeugen. Die motorische Zuspanneinrichtung kann dabei auf einfache Weise derart angesteuert werden, dass die gewünschte Zuspannkraft auch bei Verschleiß der in der Kugelkopfkupplung vorgesehenen Reibelemente gleichmäßig aufrechterhalten bleibt. Eine elastische Vorspanneinrichtung in der Form von Druckfedern wie bei der DE 102 09 866 C1 ist nicht mehr erforderlich, da die Zuspannkraft durch die motorische Zuspanneinrichtung übernommen wird. Durch die Integration der motorischen Zuspanneinrichtung in die Kniehebeleinrichtung kann die Kugelkopfkupplung nach der motorischen Entspannung weiterhin manuell mittels des Handhebels geöffnet und geschlossen werden. Die manuelle Betätigung ist dabei auf sehr leichte und kraftsparende Weise möglich. Weiterhin kann die Kugelkopfkupplung auch beim Ausfall der motorischen Zuspanneinrichtung ohne weiteres manuell geöffnet werden.

Gemäß einer vorteilhaften Ausführungsform ist einer der beiden Kniehebelarme mittels der motorischen Zuspanneinrichtung längenverstellbar, d.h. derart verstellbar, dass der Abstand zwischen einem Kniehebelgelenk, mit dem der erste und zweite Kniehebelarm miteinander verbunden sind, und einem Anlenkbereich, in dem der erste Kniehebelarm mit dem Steuerhebel oder der zweite Kniehebelarm mit dem Kupplungsgehäuse bzw. mit dem damit fest verbundenen Teil verbunden ist, motorisch veränderbar ist. Eine derartige Ausführungsform ist auf eine relativ einfache und platzsparende Weise zu realisieren. Weiterhin ermöglicht es diese Ausführungsform, den Handhebel in der gewohnten Weise zwischen seiner Öffnungsstellung und seiner Zuspannposition zu betätigen, wobei die motorische Zuspanneinrichtung nur dazu verwendet wird, in der Verschlussstellung des Handhebels den Steuerhebel mittels der motorischen Zuspanneinrichtung weiter in dessen endgültige Zuspannposition zu drängen, in welcher das Kupplungselement die gewünschte Anpresskraft an den Kugelkopf aufbringt.

Vorteilhafterweise weist der längenverstellbare Kniehebelarm einen Spindeltrieb auf, der ein erstes Spindelelement, das mittels eines Motors in Umdrehung versetzbar ist, und ein relativ zum ersten Spindelelement längsverschiebbares zweites Spindelelement umfasst, das mit dem Steuerhebel gelenkig verbunden ist. Ein derartiger Spindeltrieb ermöglicht eine konstruktiv einfache und platzsparende Anordnung. Darüber hinaus weist der Spindeltrieb zweckmäßigerweise ein selbsthemmendes Spindelgewinde auf, wodurch die Zuspannposition auch ohne andauernde Kraftaufbringung durch den Motor auf rein mechanische Weise beibehalten wird.

Alternativ zu einem elektromotorisch angetriebenen Spindeltrieb ist es auch denkbar, die motorische Zuspanneinrichtung auf andere Weise auszubilden. Beispielsweise kann die Zuspanneinrichtung auch mittels eines teleskopisch ausfahrbaren Hydraulikzylinders realisiert werden, der auf den Steuerhebel einwirkt.

Gemäß einer vorteilhaften Ausführungsform weist der Motor ein Motorgehäuse auf, das Bestandteil des längenveränderlichen Kniehebelarms ist, wobei das Kniehebelgelenk, mit dem der erste und zweite Kniehebelarm miteinander verbunden sind, mit dem Motorgehäuse verbunden ist.

Vorteilhafterweise wird der Anlenkbereich zwischen dem längenveränderlichen Kniehebelarm und dem Steuerhebel durch ein im längenveränderlichen Kniehebelarm vorgesehenes Langloch und einem am Steuerhebel vorgesehenen Gelenkbolzen gebildet, der sich durch das Langloch hindurch erstreckt und längs des Langlochs verschiebbar ist. Hierdurch ist es auf einfache Weise möglich, für den Handhebel einen Bewegungsspielraum zu schaffen, der erforderlich ist, wenn dieser von seiner geschlossenen Endstellung in eine teilweise geöffnete Zwischenstellung überführt werden soll, ohne dass der Steuerhebel mitbewegt wird, um zu verhindern, dass das Kupplungselement den Kugelkopf freigibt.

Zweckmäßigerweise ist einer der beiden Kniehebelarme einstückig mit dem Handhebel ausgebildet oder fest mit diesem verbunden. Alternativ hierzu ist es jedoch auch möglich, dass der Handhebel um dieselbe Gelenkachse wie der längenveränderliche Kniehebelarm schwenkbar und mit diesem schwenkgekoppelt, jedoch vorzugsweise relativ zu diesem längsverschiebbar ist.

Gemäß einer vorteilhaften Ausführungsform ist eine einhändig zusammen mit dem Handhebel betätigbare Sicherungseinrichtung vorgesehen, um eine Schwenkbewegung des Handhebels aus einer teilweise geöffneten Zwischenposition, in der die Kugelkopfkupplung entspannt ist und das Kupplungselement noch in einer Verschlussposition gehalten wird, in eine Öffnungsposition zu verhindern, in der das Kupplungselement geöffnet ist. Mit Hilfe einer derartigen Sicherungseinrichtung wird verhindert, dass die Kugelkopfkupplung zufällig vollständig geöffnet wird.

Vorteilhafterweise weist die Sicherungseinrichtung einen am Handhebel angeordneten Anschlag auf, der in der Zwischenposition an einem gehäusefesten Gegenanschlag anschlägt, wobei der Anschlag des Handhebels durch eine Verschiebung des Handhebels relativ zum Gegenanschlag außer Sperreingriff mit dem Gegenanschlag bringbar ist, derart, dass der Handhebel in seine vollkommen geöffnete Position schwenkbar ist. Hierdurch ist auf einfache Weise eine einhändige Betätigung der Kugelkopfkupplung möglich, wobei die Sicherungseinrichtung und der Handhebel gleichzeitig mit einer Hand betätigbar sind.

Alternativ hierzu ist es auch möglich, dass die Sicherungseinrichtung aus einer zwischen dem Steuerhebel und dem Handhebel wirkenden Sperreinrichtung besteht, wobei der am Handhebel angeordnete Anschlag in der Zwischenposition in einer eine weitere Winkelverstellung zwischen Handhebel und Steuerhebel in Richtung Öffnungsposition blockierenden Weise am Steuerhebel anschlägt.

Gemäß einer vorteilhaften Ausführungsform ist die motorische Zuspanneinrichtung mit einer Steuereinrichtung zur automatischen Steuerung der Zuspannung des Kupplungselements in Abhängigkeit der Schlingerneigung, Geschwindigkeit, Achslast und/oder anderer Anhängerparameter verbunden. Mittels einer derartigen Steuereinrichtung kann die Anpresskraft des Kupplungselements an den Kugelkopf immer entsprechend den aktuellen Fahr- und Beladungssituationen vorgenommen und gegebenenfalls variiert werden. Die aktuellen Betriebszustände an der Kugelkopfkupplung und am Fahrzeuganhänger werden über geeignete Sensoren gemessen, die an die Steuereinrichtung entsprechende Signale abgeben. Diese Signale können dann von der Steuereinrichtung in der gewünschten Weise verarbeitet werden, um die motorische Zuspanneinrichtung entsprechend den aktuellen Gegebenheiten anzusteuern. Die Steuereinrichtung kann in die Kugelkopfkupplung integriert oder separat angeordnet sein. Es ist auch möglich, die motorische Zuspanneinrichtung über eine Steuereinrichtung anzusteuern, die Teil eines elektronischen Stabilisierungssystems ist, das auf die Radbremsen des Fahrzeuganhängers einwirkt.

Die Erfindung wird nachfolgend anhand der Zeichnungen beispielhaft näher erläutert. Es zeigen:
- Figur 1:: eine Seitenansicht einer ersten Ausführungsform der erfindungsgemäßen Kugelkopfkupplung in einer teilgeöffneten Zwischenposition;
- Figur 2:: eine Seitenansicht der Kugelkopfkupplung von Figur 1, wobei der Handgriff und einige weitere Teile weggelassen worden sind, um die Kniehebeleinrichtung sichtbar zu machen;
- Figur 3:: einen Schnitt längs der Linie III-III von Figur 4, wobei sich die Kugelkopfkupplung in einer geschlossenen Entspannungsposition befindet;
- Figur 4:: eine Draufsicht auf die Kugelkopfkupplung, die sich in der geschlossenen Entspannungsposition befindet;
- Figur 5:: eine Seitenansicht der Kugelkopfkupplung in der geschlossenen Entspannungsposition;
- Figur 6:: einen Schnitt längs der Linie VI-VI von Figur 5;
- Figur 7:: einen Schnitt längs der Linie VII-VII von Figur 5;
- Figur 8:: einen Schnitt längs der Linie VIII-VIII von Figur 5;
- Figur 9:: einen Längsschnitt durch die Kugelkopfkupplung in der geschlossenen Zuspannposition;
- Figur 10:: einen Längsschnitt durch die Kugelkopfkupplung in der geschlossenen Entspannungsposition;
- Figur 11:: einen Längsschnitt durch die Kugelkopfkupplung in der teilgeöffneten Zwischenposition;
- Figur 12:: einen Längsschnitt durch die Kugelkopfkupplung in der vollkommen geöffneten Position;
- Figur 13:: einen Längsschnitt durch eine Kugelkopfkupplung gemäß einer zweiten Ausführungsform in einer teilgeöffneten Zwischenposition;
- Figur 14:: einen Längsschnitt durch die Kugelkopfkupplung von Figur 13 in der geschlossenen Zuspannposition;
- Figur 15:: einen Längsschnitt durch die Kugelkopfkupplung von Figur 13 in der geschlossenen Entspannungsposition;
- Figur 16:: einen Längsschnitt durch die Kugelkopfkupplung von Figur 13 in der teilgeöffneten Zwischenposition; und
- Figur 17:: einen Längsschnitt durch die Kugelkopfkupplung von Figur 13 in der vollkommen geöffneten Position.

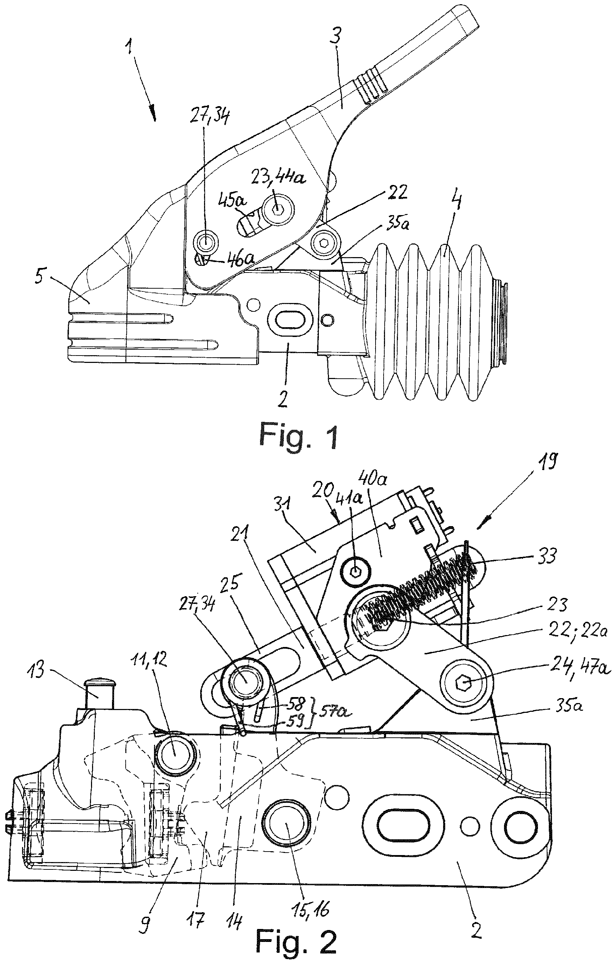

Figur 1 zeigt eine erste Ausführungsform einer erfindungsgemäßen Kugelkopfkupplung 1 für Fahrzeuganhänger wie beispielsweise Wohnwagen. Die Kugelkopfkupplung 1 umfasst ein Kupplungsgehäuse 2 und einen schwenkbaren Handhebel 3. Weiterhin ist ein am hinteren Ende des Kupplungsgehäuses 2 befestigter Faltenbalg 4 dargestellt. Der vordere Endbereich der Kugelkopfkupplung 1 ist mittels eines Rammschutzes 5 aus einem relativ weichen, elastischen Material abgedeckt.

Die Ausdrücke "hinten" und "vorn" beziehen sich auf die Position in Längsrichtung der Kugelkopfkupplung 1.

Das Kupplungsgehäuse 2 ist derart ausgebildet, dass es mit seinem hinteren Ende an einer nicht dargestellten Zugstange einer Anhängerdeichsel befestigt werden kann. Eine derartige Zugstange kann Teil einer Auflaufbremsanlage sein.

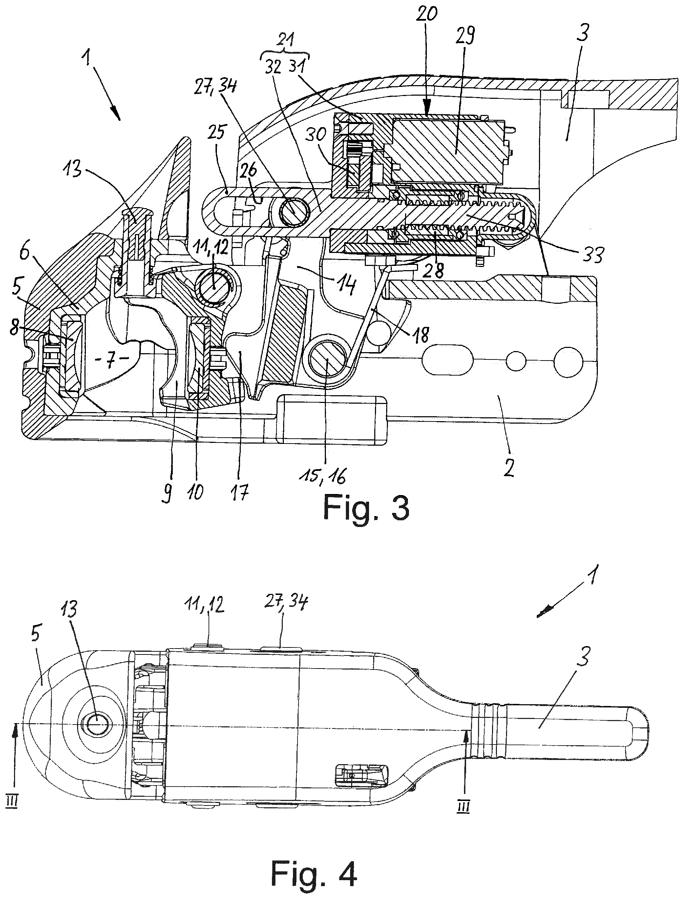

Figur 3 zeigt einen mittigen Längsschnitt durch die Kugelkopfkupplung 1 ohne Faltenbalg 4, wobei sich die Kugelkopfkupplung 1 in einer geschlossenen, entspannten Position befindet. Das hintere Ende des Handhebels 3, der in Figur 3 verkürzt dargestellt ist, befindet sich dabei in seiner untersten Stellung.

Wie aus Figur 3 ersichtlich, weist das Kupplungsgehäuse 2 einen vorderen Wandabschnitt 6 auf, der im Wesentlichen halbschalenförmig ausgebildet ist und zur vorderen und seitlichen Abstützung eines nicht dargestellten Kugelkopfes dient, wenn dieser in einen Kugelkopfaufnahmeraum 7 eingeführt ist. Am vorderen Wandabschnitt 6 ist ein Reibelement 8 befestigt, das am Kugelkopf anliegt.

Der vordere Wandabschnitt 6 und das Reibelement 8 begrenzen den Kugelkopfaufnahmeraum 7 nach vorne und etwas zur Seite. Nach hinten wird der Kugelkopfaufnahmeraum 7 durch ein beweglich im Kupplungsgehäuse 2 gelagertes, als Kalottenelement ausgebildetes Kupplungselement 9 begrenzt, an dem ebenfalls ein Reibelement 10 befestigt ist, das mit dem Kugelkopf in Eingriff gebracht werden kann.

Das Kupplungselement 9 ist um eine Schwenkachse 11 schwenkbar im Kupplungsgehäuse 2 gelagert. Die Schwenkachse 11 wird durch einen im Kupplungsgehäuse 2 gehalterten und quer zur Längsachse der Kugelkopfkupplung 1 verlaufenden Lagerzapfen 12 gebildet.

Figur 3 zeigt das Kupplungselement 9 in der geschlossenen Stellung, in welcher es ohne besonderem Druck an dem nicht dargestellten Kugelkopf anliegt und diesen derart untergreift, dass die Kugelkopfkupplung 1 nicht nach oben vom Kugelkopf abgehoben werden kann.

Die korrekte Position der Kugelkopfkupplung 1 auf dem Kugelkopf wird durch einen Anzeigestift 13 signalisiert. Dieser Anzeigestift 13 ragt durch eine obere Öffnung im Kupplungsgehäuse 2 nach oben um ein bestimmtes Maß über das Kupplungsgehäuse 2 vor, wenn die Kugelkopfkupplung 1 ordnungsgemäß auf dem Kugelkopf aufsitzt.

Die Schwenkstellung des Kupplungselements 9 wird durch einen Steuerhebel 14 bestimmt. Dieser Steuerhebel 14 ist um eine Schwenkachse 15 schwenkbar im Kupplungsgehäuse 2 gelagert. Die Schwenkachse 15 verläuft quer zur Längsachse der Kugelkopfkupplung 1 und wird durch einen Lagerzapfen 16 gebildet, der beidseitig im Kupplungsgehäuse 2 gelagert ist. Weiterhin weist der Steuerhebel 14 einen vorderen Eingriffsabschnitt 17 auf, der an hinteren Anlageflächen des Kupplungselements 9 anliegt und dadurch die Schwenkbewegung des Kupplungselements 9 im Gegenuhrzeigersinn um seine Schwenkachse 11 begrenzt.
Das Öffnen der Kugelkopfkupplung 1 erfolgt dadurch, dass der Steuerhebel 14 etwas im Uhrzeigersinn um seine Schwenkachse 15 geschwenkt wird, so dass der Eingriffsabschnitt 17 etwas nach oben in eine Stellung bewegt wird, die ein Verschwenken des Kupplungselements 9 im Gegenuhrzeigersinn in gewissem Umfang ermöglicht.

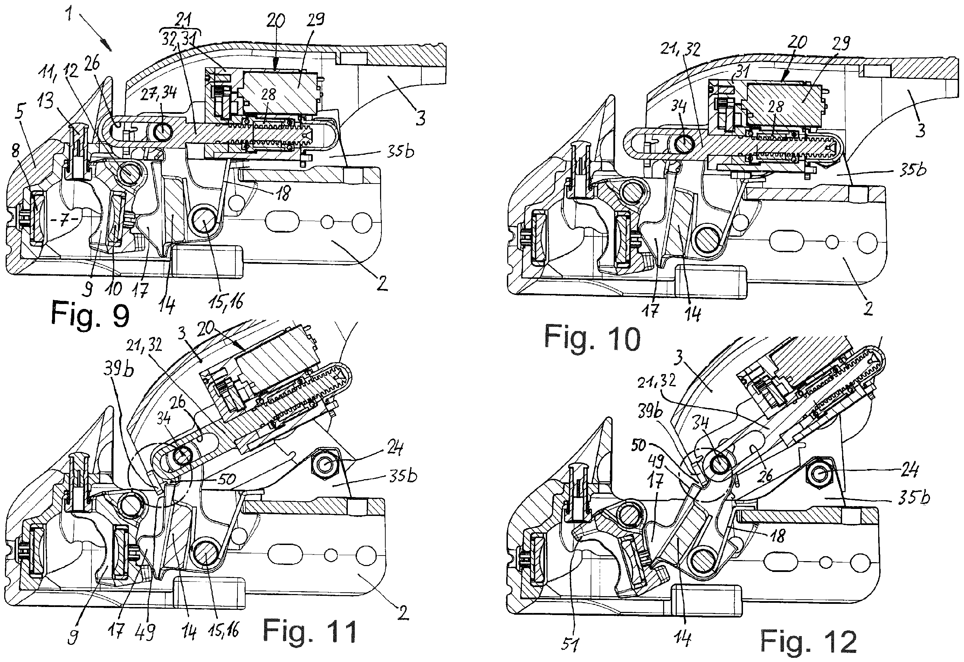

Die vollkommen geöffnete Öffnungsposition ist in Figur 12 dargestellt. In dieser Öffnungsposition kann die Kugelkopfkupplung 1 auf den Kugelkopf aufgesetzt bzw. von diesem abgehoben werden. Beim Aufsetzen der Kugelkopfkupplung 1 auf den Kugelkopf drückt dieser das Kupplungselement 9 in die in den Figuren 10 und 11 gezeigte Verschlussstellung zurück. Der Steuerhebel 14 kann dann zusammen mit seinem Eingriffsabschnitt 17 nach unten in die in den Figuren 11 und 10 gezeigte Verriegelungsposition zurückgeschwenkt werden. Dieses Zurückschwenken wird durch eine einerseits am Steuerhebel 14 und andererseits am Kupplungsgehäuse 2 abgestützte Feder 18 bewirkt oder zumindest unterstützt.

Der Steuerhebel 14 ist mit einer Kniehebeleinrichtung 19 gelenkig verbunden, die in Figur 2 dargestellt ist. Diese Kniehebeleinrichtung 19 ist über den Handhebel 3 betätigbar, um die Kugelkopfkupplung 1 manuell insbesondere der in Figur 10 gezeigten geschlossenen, entspannten Position, in welcher das Kupplungselement 9 den Kugelkopf zwar untergreift, jedoch nicht fest zugespannt, d.h. mit erhöhtem Druck an die Kugelkopfkupplung 1 angepresst ist, und der in Figur 12 gezeigten vollkommen geöffneten Position zu verstellen. Das endgültige Zuspannen der Kugelkopfkupplung 1 in die in Figur 9 gezeigte geschlossene Zuspannposition, in welcher das Kupplungselement 9 mit einer vorbestimmten Kraft gegen den Kugelkopf gepresst wird, und das Entspannen der Kugelkopfkupplung 1 erfolgt mittels einer motorischen Zuspanneinrichtung 20, die in die Kniehebeleinrichtung 19 integriert ist. Zur Verdeutlichung der Kniehebeleinrichtung 19 sind in Figur 2 der Handhebel 3, der Raumschutz 5 und der Faltenbalg 4 weggelassen.

Die Kniehebeleinrichtung 19 weist einen ersten Kniehebelarm 21 auf, der in einem vorderen Endbereich gelenkig mit dem Steuerhebel 14 verbunden ist, sowie einen zweiten Kniehebelarm 22, der einerseits mittels eines Kniehebelgelenks 23 gelenkig mit dem ersten Kniehebelarm 21 verbunden und andererseits mittels einer Gelenkachse 24 am Kupplungsgehäuse 2 gelenkig abgestützt ist.

Der erste Kniehebelarm 21 ist derart längenverstellbar, dass der Abstand zwischen dem Kniehebelgelenk 23 und einem Anlenkbereich 25, in dem der erste Kniehebelarm 21 mit dem Steuerhebel 14 verbunden ist, veränderbar ist. Dieser Anlenkbereich 25 umfasst im gezeigten Ausführungsbeispiel ein im vorderen Endbereich des ersten Kniehebelarms 21 vorgesehenes Langloch 26, durch das sich eine querverlaufende Gelenkachse 27 hindurch erstreckt, die an einem oberen Ende des Steuerhebels 14 befestigt ist.

Im gezeigten Ausführungsbeispiel weist der erste, längenverstellbare Kniehebelarm 21 einen Spindeltrieb auf. Dieser Spindeltrieb umfasst ein erstes Spindelelement in Form einer Gewindehülse 28 mit Innengewinde (Figur 3), die von einem Motor 29 und einem dazwischen angeordneten Getriebe 30 in Umdrehung versetzbar ist. Die Gewindehülse 28, die auch als Gewindemutter bezeichnet werden kann, ist in Längsrichtung unverschiebbar, jedoch um ihre Längsachse drehbar in einem Motorgehäuse 31 des Motors 29 gelagert. Weiterhin umfasst der Spindeltrieb ein zweites Spindelelement in der Form einer drehfesten Spindelstange 32, die einen Gewindeabschnitt 33 mit einem Außengewinde aufweist und längsverschiebbar im Motorgehäuse 31 gelagert ist. Der Gewindeabschnitt 33 erstreckt sich durch die Gewindehülse 28 hindurch und wirkt mit dieser derart zusammen, dass eine Drehung der Gewindehülse 28 mittels des Motors 29 eine Längsverschiebung der Spindelstange 32 bewirkt, wodurch diese mehr oder weniger weit nach vorne über das Motorgehäuse 31 hinausragt.

In Figur 3 ist die Spindelstange 32 in ihrer hintersten, am weitesten in das Motorgehäuse 31 zurückgezogenen Stellung dargestellt. Ein die Gelenkachse 27 bildender Gelenkbolzen 34 des Steuerhebels 14 liegt am hinteren Ende des Langlochs 26 an. Wird, ausgehend von dieser Position, die Spindelstange 32 mittels der motorischen Zuspanneinrichtung 20 ausgefahren, d.h. mittels der Gewindehülse 28 nach vorne bzw. nach links bewegt, wird hierdurch der Steuerhebel 14 im Gegenuhrzeigersinn geschwenkt, wodurch der Eingriffsabschnitt 17 nach unten gedrückt wird. Hierdurch wird der untere Teil des Kupplungselements 9 nach vorne gegen den zuvor eingeführten Kugelkopf mit einer vorgestimmten Druckkraft gepresst. Diese Druckkraft ist so bemessen, dass ein bestimmter Reibwert zwischen dem Kugelkopf und der Kugelkopfkupplung 1 erzielt wird, wodurch Schlingerbewegungen des Fahrzeuganhängers reduziert werden können.

Der zweite Kniehebelarm 22 wird durch zwei Stützlaschen 22a, 22b gebildet, die links- und rechtsseitig am Motorgehäuse 31 angelenkt sind. An ihrem hinteren Ende sind die Stützlaschen 22a, 22b an nach oben vorstehenden Stützkonsolen 35a, 35b des Kupplungsgehäuses 2 abgestützt, die derart in Querrichtung voneinander beabstandet sind, dass der Motor 29 zwischen den Stützkonsolen 35a, 35b Platz findet, wenn dieser sich in seiner abgesenkten Stellung befindet.

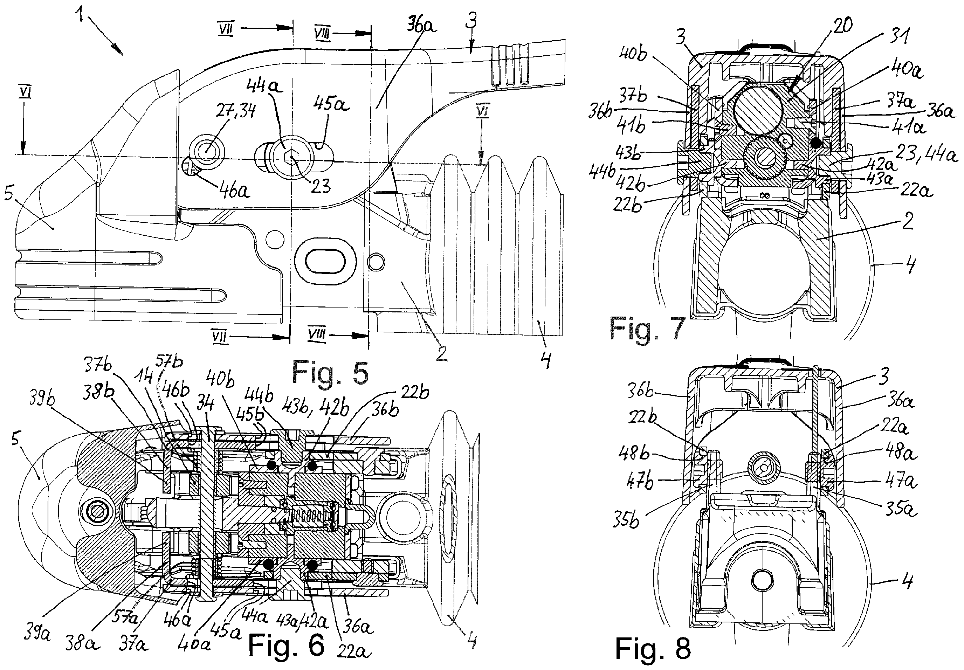

Im Folgenden wird anhand der Figuren 5 bis 8 der Aufbau und die Funktionsweise des Handhebels 3 näher beschrieben. Der Handhebel 3 dient zur manuellen Betätigung der Kniehebeleinrichtung 19 und damit zum manuellen Öffnen und Schließen der Kugelkopfkupplung 1, ohne dass jedoch die Zuspannkraft zum endgültigen Zuspannen der Kugelkopfkupplung 1 und die Kraft zum Entspannen der Kugelkopfkupplung 1 manuell über den Handhebel 3 aufgebracht werden müsste, da dies von der motorischen Zuspanneinrichtung 20 übernommen wird. Ferner ist der Handhebel 3 derart ausgestaltet, dass er beim Öffnen der Kugelkopfkupplung 1 zunächst in einer teilgeöffneten Zwischenposition blockiert ist, in welcher das Kupplungselement 9 den Kugelkopf noch untergreift, und der Handhebel 3 erst dann in die vollkommen geöffnete Position überführt werden kann, wenn diese Blockierung durch ein zusätzliches Verschieben des Handhebels 3 relativ zum Steuerhebel 14 aufgehoben wird. Auf diese Weise ist der Handhebel 3 Teil einer einhändig zu betätigenden Sicherungseinrichtung, die verhindert, dass die Kugelkopfkupplung 1 versehentlich vollkommen geöffnet wird und vom Kugelkopf abgehoben werden kann.

Der Handhebel 3 hat in seinem vorderen Bereich den Querschnitt eines umgekehrten "U" mit Seitenwänden 36a, 36b. Vorzugsweise besteht der Handhebel 3 aus einem Kunststoffmaterial oder aus Metall. Im dargestellten Ausführungsbeispiel besteht der Handhebel 3 aus Kunststoff. Zur Verstärkung des Handhebels 3 ist daher auf der Innenseite einer jeden Seitenwand 36a, 36b eine Platte 37a, 37b vorgesehen, die mit den Seitenwänden 36a, 36b, fest verbunden ist. Die Platten 37a, 37b können beispielsweise, wie aus Figur 7 ersichtlich, in vertikale Aussparungen der Seitenwände 36a, 36b eingesetzt sein. Weiterhin sind die Platten 37a, 37b in der Draufsicht, die in Figur 6 dargestellt ist, L-förmig ausgebildet. Sie weisen daher einen vorderen Schenkel 38a, 38b auf, der quer zur Längsachse der Kugelkopfkupplung 1 zu deren Mitte hin verläuft. Diese vorderen Schenkel 38a, 38b erstrecken sich bis in einen Bereich, der vor dem Steuerhebel 14 liegt, und weisen Anschläge 39a, 39b auf, die, wie später noch näher erläutert wird, in und außer Eingriff mit dem Steuerhebel 14 gebracht werden können. Zur Mitte hin sind die vorderen Schenkel 38a, 38b voneinander derart beabstandet, dass sich die Spindelstange 32 hindurcherstrecken kann.

Das Motorgehäuse 31 umfasst zwei vertikale Seitenplatten 40a, 40b, die mit Schrauben 41a, 41b (Figur 7) fest am übrigen Motorgehäuse 31 befestigt sind. Von diesen Seitenplatten 40a, 40b erstrecken sich Lagerbolzen 42a, 42b seitlich nach außen, die mit dem Motorgehäuse 31 verbunden sind. Diese Lagerbolzen 42a, 42b weisen einen zylindrischen Lagerabschnitt 43a, 43b zur gelenkigen Lagerung der Stützlaschen 22a, 22b auf, die den zweiten Kniehebelarm 22 bilden. Die Lagerbolzen 42a, 42b bilden daher das Kniehebelgelenk 23.

In die Lagerbolzen 42a, 42b sind ferner zylindrische Mitnehmerbolzen 44a, 44b eingeschraubt, die seitlich nach außen über die Lagerbolzen 42a, 42b und Stützlaschen 22a, 22b vorstehen. Diese Mitnehmerbolzen 44a, 44b durchdringen Langlöcher 45a, 45b, die in den Seitenwänden 36a, 36b und Platten 37a, 37b des Handhebels 3 vorgesehen sind. Aufgrund dieser Langlöcher 45a, 45b kann der Handhebel 3 in seiner Längsrichtung relativ zum Motorgehäuse 31 und damit relativ zur Kniehebeleinrichtung 19 um ein bestimmtes Maß verschoben werden bzw. das Kniehebelgelenk 23 kann sich längs der Langlöcher 45a, 45b ein Stück weit verschieben, ohne dass dies eine Verschiebung des Handhebels 3 relativ zum Kupplungsgehäuse 2 zur Folge hätte.

Wie aus Figur 6 weiterhin ersichtlich, erstreckt sich der Gelenkbolzen 34, der mit dem oberen Ende des Steuerhebels 14 verbunden ist, quer durch die gesamte Kugelkopfkupplung 1 und durchdringt auch schräg angeordnete Langlöcher 46a, 46b, die in den Seitenwänden 36a, 36b und Platten 37a, 37b des Handhebels 3 vorgesehen sind. Über die vorderen Langlöcher 46a, 46b ist der Handhebel 3 somit in seinem vorderen Bereich schwenkbar und verschiebbar am Gelenkbolzen 34 des Steuerhebels 14 geführt, wobei der Gelenkbolzen 34 die Gelenk- oder Schwenkachse 27 für den Handhebel 3 bildet. Die Mitnehmerbolzen 44a, 44b dienen dagegen lediglich dazu, das Kniehebelgelenk 23 insbesondere nach oben und unten mitzuschwenken, wenn der Handhebel 3 an seinem hinteren Ende manuell nach oben bzw. unten geschwenkt wird.

Aus den Figuren 6 und 8 ist ersichtlich, dass die Stützlaschen 22a, 22b, die den zweiten Kniehebelarm 22 bilden, mittels Lagerbolzen 47a, 47b gelenkig an den Stützkonsolen 35a, 35b gelagert sind. Die Lagerbolzen 47a, 47b sind hierzu in die Stützkonsolen 35a, 35b eingeschraubt und stehen seitlich nach außen über diese vor. In ihrem seitlich überstehenden Abstand weisen sie einen zylindrischen Lagerabschnitt 48a, 48b auf, um den sich die Stützlaschen 22a, 22b drehen können.

Im Folgenden wird anhand der Figuren 9 bis 12 die Funktionsweise der Kugelkopfkupplung 1 näher erläutert.

Figur 9 zeigt die geschlossene Zuspannposition, in welcher sich die Kugelkopfkupplung 1 befindet, wenn sie auf einen nicht dargestellten Kugelkopf aufgesetzt ist, so dass ein aus Zugfahrzeug und Fahrzeuganhänger bestehendes Gespann fahrbereit ist. In dieser Position ist der Handhebel 3 maximal nach unten geschwenkt. Das in Figur 9 nicht dargestellte, jedoch aus Figur 2 ersichtliche Kniehebelgelenk 23 befindet sich in seiner tiefsten Stellung, in der es etwas unterhalb einer Geraden liegt, die durch die Gelenkachsen 24 und 27 hindurchgeht. In dieser Position befindet sich das Kniehebelgelenk 23 somit in einer Untertotpunktlage, wobei sich das vordere Ende der Stützlaschen 22a, 22b am Kupplungsgehäuse 2 aufstützt. Gleichzeitig ist die Spindelstange 32 mittels der motorischen Zuspanneinrichtung 20 in eine maximal nach vorne vorstehende Position ausgefahren worden. Der Gelenkbolzen 34 des Steuerhebels 14 liegt in dieser Position am hinteren Ende des Langlochs 26 an und wird mittels der Spindelstange 32 mit einer durch die motorische Zuspanneinrichtung 20 bestimmten Kraft nach vorne gedrückt, die eine entsprechende Schwenkkraft des Steuerhebels 14 im Gegenuhrzeigersinn bewirkt. Der Eingriffsabschnitt 17 des Steuerhebels 14 wird hierdurch maximal nach unten gedrückt, wodurch das Kupplungselement 9 nach vorne in seine Zuspannposition gepresst wird.

Die von der motorischen Zuspanneinrichtung auf das Kupplungselement 9 ausgeübte Druckkraft wird durch eine nicht dargestellte elektronische Steuereinrichtung gesteuert, mit der die Zuspannung des Kupplungselements 9 in Abhängigkeit unterschiedlicher Parameter wie Schlingerneigung, Geschwindigkeit und/oder der Achslast automatisch gesteuert wird. Vorzugsweise wird das Motordrehmoment und damit die zu erwartende Zuspannung und das daraus resultierende Dämpfungsmoment zwischen Kugelkopfkupplung 1 und Kugelkopf über den von der Steuereinrichtung eingeprägten Strom eingestellt. Die eingeprägten Ströme können in verschiedenster Weise aus Eingangsdaten errechnet werden, die von entsprechenden Messsensoren an der Kugelkopfkupplung 1 und/oder am Fahrzeuganhänger ermittelt und an die Steuereinrichtung weitergegeben werden. Alternativ ist es auch möglich, die für die motorische Zuspannung erforderlichen Impulse manuell einzugeben, beispielsweise über einen Taster.

Erhält die elektronische Steuereinrichtung einen Befehl zum Öffnen der Kugelkopfkupplung 1, was beispielsweise mittels eines entsprechenden Schalters im Zugfahrzeug, an der Kugelkopfkupplung 1 oder am Fahrzeuganhänger erfolgen kann, erhält die motorische Zuspanneinrichtung 20 ein entsprechendes Öffnungssignal. Die motorische Zuspanneinrichtung 20 fährt daraufhin, wie aus Figur 10 ersichtlich, die Spindelstange 32 nach rechts zurück in ihre maximal in das Motorgehäuse 31 zurückgefahrene Position. Der Druck auf den Gelenkbolzen 34 des Steuerhebels 14 wird aufgehoben, so dass sich der Steuerhebel 14 etwas im Uhrzeigersinn drehen kann, wodurch der Eingriffsabschnitt 17 etwas angehoben wird. Hierdurch wird der Anpressdruck auf das Kupplungselement 9 aufgehoben.

Das Kupplungselement 9 befindet sich damit in einer zwar noch geschlossenen, jedoch entspannten Position, in welcher es keinen nennenswerten Druck mehr auf den Kugelkopf ausübt. Da sich in dieser Position der Gelenkbolzen 34 des Steuerhebels 14 bereits etwas nach hinten bewegt hat und am hinteren Ende der schrägen Langlöcher 46a, 46b des Handhebels 3 anliegt, wird der Handhebel 3 ebenfalls relativ zum Kupplungsgehäuse 2 und relativ zum Motorgehäuse 31 etwas nach hinten verschoben. Dies ist aufgrund der Langlöcher 45a, 45b (Figur 5) ohne weiteres möglich.

Da mittels der motorischen Zuspanneinrichtung 20 der Anpressdruck weggenommen worden ist, ist es nun auf einfache Weise möglich, den Handhebel 3 manuell bis in eine teilgeöffnete Zwischenposition hochzuschwenken, die in Figur 11 dargestellt ist. Beim Hochschwenken wird das Kniehebelgelenk 23 entsprechend nach oben mitgenommen, so dass die Kniehebeleinrichtung 19 die in Figur 2 dargestellte, nach oben abgewinkelte Position einnimmt. Der Gelenkbolzen 34 gleitet dabei längs des Langlochs 26 der Spindelstange 32, so dass das Hochschwenken des Handhebels 3 und damit des ersten Kniehebelarms 21 keine weitere Schwenkbewegung des Steuerhebels 14 bewirkt. Der Steuerhebel 14 befindet sich damit noch in einer Position, in welcher das Aufschwenken des Kupplungselements 9 in seine den Kugelkopf freigebende Öffnungsstellung blockiert ist.

Wenn der Handhebel 3 beim Hochschwenken die in Figur 11 dargestellte teilgeöffnete Zwischenposition erreicht, schlagen die Anschläge 39a, 39b des Handhebels 3 derart an der Vorderseite des Steuerhebels 4 an, dass ein weiteres Hochschwenken des Handhebels 3 gesperrt ist. Der betreffende Anschlagbereich des Steuerhebels 14 bildet damit einen Gegenanschlag 49, der zusammen mit den Anschlägen 39a, 39b des Handhebels 3 eine formschlüssig wirkende Sicherheitseinrichtung bildet, welche das weitere Öffnen des Handhebels 3 ohne weitere Verschiebung des Handhebels 3 relativ zum Steuerhebel 14 verhindert.

Soll die Kugelkopfkupplung 1 in die vollkommen geöffnete Position überführt werden, die in Figur 12 dargestellt ist, muss der Handhebel 3 zunächst relativ zum Steuerhebel 14 nach oben gezogen werden. Dies ist aufgrund der schrägen Langlöcher 46a, 46b (Figur 1) im Handhebel 3 möglich, die in dieser Position zumindest überwiegend vertikal verlaufen. Die an der Kniehebeleinrichtung 19 befestigten Mitnehmerbolzen 44a, 44b stehen einem derartigen Verschieben des Handhebels 3 ebenfalls nicht im Wege, da diese längs der Langlöcher 45a, 45b gleiten können.

Das nach oben Ziehen des Handhebels 3 hat zur Folge, dass, wie aus Figur 12 ersichtlich, die Anschläge 39a, 39b des Handhebels 3 außer Sperreingriff mit dem Gegenanschlag 49 des Steuerhebels 14 gelangen und in den Bereich eines zurückgesetzten Freiraums 50 des Steuerhebels 14 gelangen können, der zwischen dem Gegenanschlag 49 und dem Gelenkbolzen 34 angeordnet ist. Hierdurch wird die Schwenksperre aufgehoben und der Handhebel 3 kann in seine vollkommen geöffnete Position hochgeschwenkt werden. In dieser Position liegt der Gelenkbolzen 34 am vorderen Ende des Langlochs 26 der Spindelstange 32 an. Der Steuerhebel 14 befindet sich in seiner Öffnungsposition, in welcher sein Eingriffsabschnitt 17 dem Kupplungselement 9 den notwendigen rückseitigen Freiraum zum vollkommenen Öffnen bietet. Das untere Ende des Kupplungselements 9 ist dabei so weit nach hinten verschwenkt, dass die Kugelkopfkupplung 1 vom Kugelkopf abgenommen werden kann.

Soll die geöffnete Kugelkopfkupplung 1 in umgekehrter Weise auf einen Kugelkopf aufgesetzt und verriegelt werden, so erfolgt dies zumindest weitgehend automatisch. Beim Aufsetzen der Kugelkopfkupplung 1 wird das Kupplungselement 9 durch den Kugelkopf, der auf einen oberen Ansatz 51 (Figur 12) des Kupplungselements 9 drückt, in die geschlossene Position geschwenkt. Die Feder 18 schwenkt den Steuerhebel 14 im Gegenuhrzeigersinn bis in seine in Figur 10 gezeigte geschlossene, jedoch noch drucklose Position. Zwei auf dem Gelenkbolzen 34 gelagerte Schenkelfedern 57a, 57b (s. Figuren 2 und 6), die sich mit einem Schenkel 58 am Steuerhebel 14 und mit ihrem anderen Schenkel 59 an den Platten 37a, 37b des Handhebels 3 abstützen, schieben aufgrund ihrer Vorspannung den Handgriff 3 nach vorne, wodurch die Anschläge 39a, 39b des Handgriffs 3 vom Steuerhebel 14 gelöst und der Handgriff 3 zusammen mit den Platten 37a, 37b nach vorne geschoben wird. Auf diese Weise wird die formschlüssige Sicherungseinrichtung, welche das unabsichtliche vollkommene Öffnen der Kugelkopfkupplung 1 verhindern soll, wieder aktiviert. Hierbei wird auch der Handhebel 3 zusammen mit der Kniehebeleinrichtung 19 nach unten in die geschlossene Position geschwenkt. Das weitere Zuspannen des Kupplungselements 3 erfolgt dann mittels der motorischen Zuspanneinrichtung 20, indem die Spindelstange 32 mittels des Motors 29 ausgefahren wird, wodurch der Steuerhebel 14 und damit das Kupplungselement 9 in ihre zugespannte Endstellung gedrückt werden.

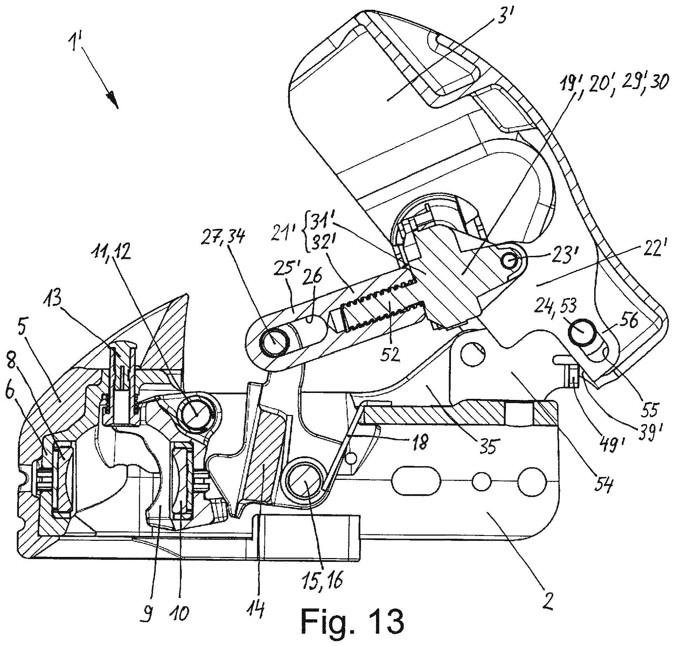

Anhand der Figuren 13 bis 17 wird im Folgenden eine zweite Ausführungsform der erfindungsgemäßen Kugelkopfkupplung beschrieben.

Bei dieser Ausführungsform sind Aufbau und Funktionsweise des Kupplungsgehäuses 2, Kupplungselements 9 und Steuerhebels 14 gleich oder ganz ähnlich, so dass diesbezüglich zur Vermeidung von Wiederholungen auf die erste Ausführungsform verwiesen wird. Elemente der zweiten Ausführungsform, die zu denjenigen der ersten Ausführungsform identisch sind, sind mit gleichen Bezugszeichen versehen. Darüber hinaus wird auch bei der zweiten Ausführungsform das gleiche Grundprinzip verwendet, nämlich das endgültige Zuspannen der Kugelkopfkupplung 1' bzw. das Entspannen aus der zugespannten Position mittels einer motorischen Zuspanneinrichtung 20' vorzunehmen, die in eine Kniehebeleinrichtung 19' integriert ist. Die motorische Zuspanneinrichtung 20' ist in den Figuren 13 bis 17 lediglich schematisch dargestellt.

Ein wesentlicher Unterschied zur ersten Ausführungsform besteht darin, dass bei der zweiten Ausführungsform der Handhebel 3' an seinem hinteren Ende schwenkbar am Kupplungsgehäuse 2 gelagert und Teil des zweiten Kniehebelarms 22' ist, wie im Folgenden noch näher erläutert wird. Ferner ist die Sicherungseinrichtung zum Überführen des Handhebels 3' in seine vollkommen geöffnete Position anders als bei der ersten Ausführungsform ausgebildet.

Wie insbesondere aus Figur 13 ersichtlich, umfasst die Kniehebeleinrichtung 19' einen ersten Kniehebelarm 21', der eine Spindelstange 32' und einen Motor 29' mit einem Motorgehäuse 31' umfasst. Die Spindelstange 32' weist in ihrem hinteren Endbereich eine axiale Gewindebohrung auf, in die eine vom Motor 29' antreibbare Gewindewelle 52 eingreift. Wird die Gewindewelle 52 mittels des Motors 29' gedreht, wird die drehfeste Spindelstange 32' in ihrer Längsrichtung verschoben, d.h. vom Motorgehäuse 31' weg bewegt oder auf dieses zu bewegt. Diese Längsverschiebung der Gewindestange 32' bewirkt in gleicher Weise wie bei der ersten Ausführungsform ein Zuspannen bzw. Entspannen des Kupplungselements 9 über den Gelenkbolzen 34 und den Steuerhebel 14.

Das Motorgehäuse 31' ist mittels eines Kniehebelgelenks 23' gelenkig am Handhebel 3' gelagert. Weiterhin ist der Handhebel 3' an seinem hinteren Ende schwenkbar und etwas längsverschiebbar an Gelenkbolzen 53 gelagert, die an vertikalen Haltelaschen 54 befestigt sind. Die Haltelaschen 54 sind an den Stützkonsolen 35 des Kupplungsgehäuses 2 befestigt und verlängern diese nach hinten. Die Gelenkbolzen 53 bilden eine querverlaufende, hintere Gelenkachse 24 der Kniehebeleinrichtung 19'. Eine Längsverschiebung des Handhebels 3' relativ zu dieser Gelenkachse 24 ist durch ein in Längsrichtung des Handhebels 3' verlaufendes Langloch 55 möglich, das sich in einem hinteren Endbereich 56 des Handhebels 3' befindet.

Im Folgenden wird die Funktionsweise der zweiten Ausführungsform näher erläutert.

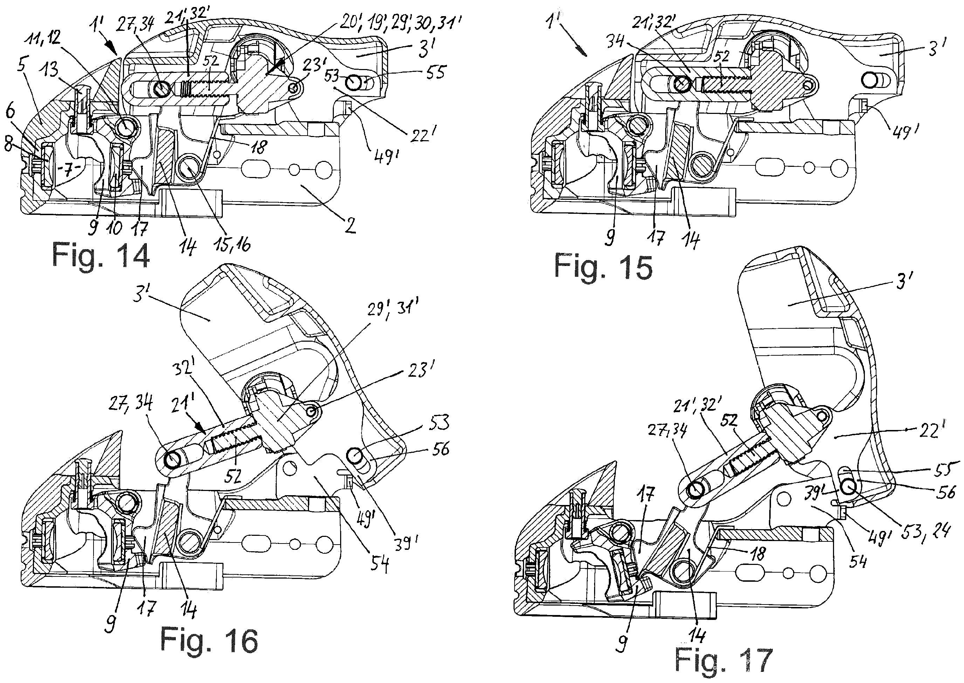

Figur 14 zeigt die Kugelkopfkupplung 1 in der geschlossenen Zuspannposition, die der Figur 9 der ersten Ausführungsform entspricht. In dieser Position wird das Kupplungselement 9 in gleicher Weise wie bei der ersten Ausführungsform gegen den nicht dargestellten Kugelkopf gedrückt, wobei die Druckkraft durch die motorische Zuspanneinrichtung 20' aufgebracht wird. Die Spindelstange 32' wird in dieser Position vom Motor 29' so weit ausgefahren, d.h. nach vorne bewegt, bis das Kupplungselement 9 den gewünschten Anpressdruck am Kugelkopf erreicht. Dies kann beispielsweise durch Messung des Stroms erfasst werden, der dem Motor 29' zugeführt wird. Ist der notwendige Anpressdruck erreicht, muss der Motor 29' nicht weiter bestromt werden, da der Spindeltrieb der zweiten Ausführungsform in gleicher Weise wie derjenige der ersten Ausführungsform selbsthemmend ist.

Der über den Spindeltrieb, das Motorgehäuse 29' und das Kniehebelgelenk 23 auf den Handhebel 3' übertragene Druck wird vom hinteren Bereich des Handhebels 3', d.h. vom zweiten Kniehebelarm 22', auf den Gelenkbolzen 53 und damit auf das Kupplungsgehäuse 2 übertragen. Der Gelenkbolzen 53 liegt damit am vorderen Ende des Langlochs 55 an, d.h. der Handhebel 3' befindet sich damit in seiner hintersten Stellung relativ zum Kupplungsgehäuse 2. Eine ungewollte Abknickbewegung der Kniehebeleinrichtung 19' nach oben kann nicht erfolgen, da sich das Kniehebelgelenk 23 wiederum in einer Untertotpunktstellung, d.h. unterhalb einer Ebene befindet, die durch den Gelenkbolzen 34 des Steuerhebels 14 und den Gelenkbolzen 53 der hinteren Haltelaschen 54 aufgespannt wird.

Figur 15 zeigt die Kugelkopfkupplung 1' in der geschlossenen Entspannungsposition, die der Figur 10 der ersten Ausführungsform entspricht. In dieser Position ist die Spindelstange 32' durch motorisches Drehen der Gewindewelle 52 nach hinten, d.h. in Figur 15 nach rechts, bewegt worden, so dass der Steuerhebel 14 sich etwas im Uhrzeigersinn drehen und das Kupplungselement 9 entspannt werden kann, ohne sich jedoch in die Öffnungsstellung bewegen zu können.

Soll die Kugelkopfkupplung 1' geöffnet werden, wird der Handhebel 3' an seinem vorderen Ende manuell nach oben bis in die teilgeöffnete Zwischenposition geschwenkt, die in Figur 16 gezeigt ist. Ein weiteres Hochschwenken des Handhebels 3' ist zunächst nicht möglich, da der hintere Endbereich 56 des Handhebels 3', der einen Anschlag 39' bildet, im Schwenkbereich eines Gegenanschlags 49' liegt, der am hinteren Ende der Haltelaschen 54 ausgebildet ist. Der Anschlag 39' und Gegenanschlag 49' bildet damit eine Sicherungseinrichtung zum Verhindern einer Schwenkbewegung des Handhebels 3' aus einer teilweise geöffneten Zwischenposition in die vollkommen geöffnete Position, um ein versehentliches Abkuppeln der Kugelkopfkupplung 1' vom Kugelkopf zu verhindern.

Soll die Kugelkopfkupplung 1' ganz geöffnet werden, wird, wie aus Figur 17 ersichtlich, der Handhebel 3' so weit nach oben gezogen, bis der Gelenkbolzen 53 der Haltelaschen 54 am hinteren Ende des Langlochs 55 anschlägt. Hierdurch gerät der Anschlag 39' außer Eingriff mit dem Gegenanschlag 49', wodurch ein weiteres Hochschwenken des Handhebels 3' bis in seine vollkommen geöffnete Position möglich ist.

Soll die Kugelkopfkupplung 1' auf einen Kugelkopf aufgesetzt und mit diesem verriegelt werden, erfolgt dies in gleicher Weise wie anhand der ersten Ausführungsform beschrieben.

Es ist ersichtlich, dass bei der zweiten Ausführungsform der Handhebel 3' Teil der Kniehebeleinrichtung 19' ist und den zweiten Kniehebelarm 22' bildet, über den eine Kraftableitung auf das Kupplungsgehäuse 2 erfolgt, wenn das Kupplungselement 9 mittels der motorischen Zuspanneinrichtung 20' gegen den Kugelkopf gepresst wird. Im Gegensatz dazu ist bei der ersten Ausführungsform der dortige Handhebel 3 ein von der kraftübertragenden Kniehebeleinrichtung 19 getrenntes Teil, das relativ zur Kniehebeleinrichtung 19 längsverschiebbar und mit dieser lediglich schwenkgekoppelt ist.

Im Rahmen der Erfindung sind eine Vielzahl von Variationen möglich. Beispielsweise ist es möglich, dass die motorische Zuspanneinrichtung nicht mit dem vorderen Kniehebelarm 21, 21', sondern mit dem hinteren Kniehebelarm 22 zusammenwirkt, um eine Längenverstellung des hinteren Kniehebelarms 22, d.h. eine motorische Veränderung des Abstands zwischen dem Kniehebelgelenk 23 und der Gelenkachse 24 des Kupplungsgehäuse 2 zu erreichen. Als Motor 29, 29' wird vorzugsweise ein Elektromotor verwendet. Andere Motoren, insbesondere ein Hydraulikmotor, sind jedoch auch denkbar. Weiterhin ist es auch möglich, die motorische Verschiebung des ersten oder zweiten Spindelarms nicht mittels eines Spindeltriebs, sondern auf andere Weise, beispielsweise mittels eines Hydraulikzylinders, zu bewerkstelligen.

Bei beiden Ausführungsformen ist von besonderem Vorteil, dass die zugespannte Kugelkopfkupplung 1, 1' auch bei Ausfall der motorischen Zuspanneinrichtung 20, 20' manuell geöffnet werden kann. Hierzu ist es lediglich erforderlich, den Handhebel 3, 3' mit erhöhter Kraft in die Öffnungsposition zu ziehen. Aufgrund der Kniehebeleinrichtung 19, 19' kann mittels des Handhebels 3, 3' eine hohe Kraft in Öffnungsrichtung auf das Kniehebelgelenk 23, 23' in Richtung Öffnungsposition aufgebracht werden, wenn dieses nahe der Totpunktebene liegt, die durch die Gelenkachsen 24, 27 aufgespannt wird. Auch wenn bei der erfindungsgemäßen Kugelkopfkupplung 1, 1' keine elastische Vorspanneinrichtung in der Form von Druckfedern erforderlich sind, um die benötigte Anpresskraft des Kupplungselements 9 an den Kugelkopf zu bewirken, ist das erfindungsgemäße Gesamtsystem dennoch derart elastisch nachgiebig, dass die Totpunktstellung der Kniehebelanordnung auch ohne Entspannung durch die motorische Zuspanneinrichtung 20 manuell überwunden werden kann.

## Patentansprüche

1. Kugelkopfkupplung für Fahrzeuganhänger, mit
- einem Kupplungsgehäuse (2),
- einem Kupplungselement (9), das beweglich im Kupplungsgehäuse (2) gelagert und zum Halten der Kugelkopfkupplung (1, 1') am Kugelkopf ausgebildet ist,
- einem mit dem Kupplungselement (9) zusammenwirkenden Steuerhebel (14) zum Verriegeln des Kupplungselements (9) in einer Verschlussposition, wobei der Steuerhebel (14) schwenkbar am Kupplungsgehäuse (2) gehaltert ist,
- einer Kniehebeleinrichtung (19, 19') zum Betätigen des Steuerhebels (14), wobei die Kniehebelanordnung (19, 19') einen ersten Kniehebelarm (21, 21'), der gelenkig mit dem Steuerhebel (14) verbunden ist, und einen zweiten Kniehebelarm (22, 22') aufweist, der gelenkig am Kupplungsgehäuse (2) oder einem damit fest verbundenen Teil abgestützt ist,
- einem Handhebel (3, 3') zum Betätigen der Kniehebeleinrichtung (19, 19'),
**dadurch gekennzeichnet, dass** die Kugelkopfkupplung (1, 1') eine in die Kniehebeleinrichtung (19, 19') integrierte motorische Zuspanneinrichtung (20, 20') zum Zuspannen der Kugelkopfkupplung (1, 1') aufweist.

2. Kugelkopfkupplung nach Anspruch 1, **dadurch gekennzeichnet, dass** einer der beiden Kniehebelarme (21, 21'; 22, 22') mittels der motorischen Zuspanneinrichtung (20, 20') längenverstellbar ist, derart, dass der Abstand zwischen einem Kniehebelgelenk (23, 23'), mit dem der erste und zweite Kniehebelarm (21, 21'; 22, 22') miteinander verbunden sind, und einem Anlenkbereich (25, 25'; 56), in dem der erste Kniehebelarm (21, 21') mit dem Steuerhebel (14) oder der zweite Kniehebelarm (22, 22') mit dem Kupplungsgehäuse (2) oder mit dem damit fest verbundenen Teil verbunden ist, motorisch veränderbar ist.

3. Kugelkopfkupplung nach Anspruch 2, **dadurch gekennzeichnet, dass** der längenverstellbare Kniehebelarm (21, 21') einen Spindeltrieb aufweist, der ein erstes Spindelelement, das mittels eines Motors (29) in Umdrehung versetzbar ist, und ein relativ zum ersten Spindelelement längsverschiebbares zweites Spindelelement umfasst, das mit dem Steuerhebel (14) gelenkig verbunden ist.

4. Kugelkopfkupplung nach Anspruch 3, **dadurch gekennzeichnet, dass** der Motor (29) ein Motorgehäuse (31, 31') aufweist, das Bestandteil des längenveränderlichen Kniehebelarms (21, 21') ist, wobei das Kniehebelgelenk (23, 23'), mit dem der erste und zweite Kniehebelarm (21, 21'; 22, 22') miteinander verbunden sind, mit dem Motorgehäuse (31, 31') verbunden ist.

5. Kugelkopfkupplung nach einem der Ansprüche 2 bis 4, **dadurch gekennzeichnet, dass** der Anlenkbereich (25, 25') zwischen dem längenveränderlichen Kniehebelarm (21, 21') und dem Steuerhebel (14) durch ein im längenveränderlichen Kniehebelarm (21, 21') vorgesehenes Langloch (26) und einen am Steuerhebel (14) vorgesehenen Gelenkbolzen (34) gebildet wird, der sich durch das Langloch (26) hindurch erstreckt und längs des Langlochs (26) verschiebbar ist.

6. Kugelkopfkupplung nach einem der vorhergehenden Ansprüche, **dadurch gekennzeichnet, dass** einer der beiden Kniehebelarme (21, 21'; 22, 22') einstückig mit dem Handhebel (3, 3') ausgebildet oder fest mit diesem verbunden ist.

7. Kugelkopfkupplung nach einem der Ansprüche 1 bis 5, **dadurch gekennzeichnet, dass** der Handhebel (3) um dieselbe Gelenkachse (27) wie der längenveränderliche Kniehebelarm (21) schwenkbar ist.

8. Kugelkopfkupplung nach einem der vorhergehenden Ansprüche, **dadurch gekennzeichnet, dass** eine einhändig zusammen mit dem Handhebel (3, 3') betätigbare Sicherungseinrichtung zum Verhindern einer Schwenkbewegung des Handhebels (3, 3') aus einer teilweise geöffneten Zwischenposition, in der die Kugelkopfkupplung (1, 1') entspannt ist und das Kupplungselement (9) noch in einer Verschlussposition gehalten wird, in eine Öffnungsposition, in der das Kupplungselement (9) geöffnet ist, vorgesehen ist.

9. Kugelkopfkupplung nach Anspruch 8, **dadurch gekennzeichnet, dass** die Sicherungseinrichtung einen am Handhebel (3') angeordneten Anschlag (39') aufweist, der in der Zwischenposition an einem gehäusefesten Gegenanschlag (49') anschlägt, wobei der Anschlag (39') des Handhebels (3') durch eine Verschiebung des Handhebels (3') relativ zum Gegenanschlag (49') außer Sperreingriff mit dem Gegenanschlag (49') bringbar ist, derart, dass der Handhebel (3') in seine vollkommen geöffnete Position schwenkbar ist.

10. Kugelkopfkupplung nach Anspruch 8, **dadurch gekennzeichnet, dass** die Sicherungseinrichtung aus einer zwischen dem Steuerhebel (14) und dem Handhebel (3) wirkenden Sperreinrichtung besteht, wobei der am Handhebel (3) angeordnete Anschlag (39a, 39b) in der Zwischenposition in einer eine weitere Winkelverstellung zwischen Handhebel (3) und Steuerhebel (14) in Richtung Öffnungsposition blockierenden Weise am Steuerhebel (14) anschlägt.

11. Kugelkopfkupplung nach einem der vorhergehenden Ansprüche, **dadurch gekennzeichnet, dass** die motorische Zuspanneinrichtung (20, 20') mit einer Steuereinrichtung zur automatischen Steuerung der Zuspannung des Kupplungselements (9) in Abhängigkeit der Schlingerneigung, Geschwindigkeit und/oder Achslast verbunden ist.

## Claims

1. Ball head coupling for a vehicle trailer, comprising
- a coupling housing (2),
- a coupling element (9) that is movably mounted in the coupling housing (2) and designed to hold the ball head coupling (1, 1') on the ball head,
- a control lever (14) that interacts with the coupling element (9) in order to lock the coupling element (9) in a closed position, the control lever (14) being pivotably held on the coupling housing (2),
- a toggle lever device (19, 19') for operating the control lever (14), the toggle lever assembly (19, 19') having a first toggle lever arm (21, 21') that is connected to the control lever (14) in an articulated manner, and having a second toggle lever arm (22, 22') that is supported on the coupling housing (2) in an articulated manner or on a part rigidly connected thereto,
- a hand lever (3, 3') for operating the toggle lever device (19, 19'),
**characterised in that** the ball head coupling (1, 1') has a motorised clamp device (20, 20') integrated in the toggle lever device (19, 19') in order to clamp the ball head coupling (1, 1').

2. Ball head coupling according to claim 1, **characterised in that** the length of one of the two toggle lever arms (21, 21'; 22, 22') can be adjusted by means of the motorised clamp device (20, 20') in such a way that is possible to vary, in a motorised manner, the distance between a toggle lever joint (23, 23') via which the first and second toggle lever arm (21, 21'; 22, 22') are interconnected and an articulation region (25, 25'; 56) in which the first toggle lever arm (21, 21') is connected to the control lever (14) or the second toggle lever arm (22, 22') is connected to the coupling housing (2) or to the part rigidly connected thereto.

3. Ball head coupling according to claim 2, **characterised in that** the length-adjustable toggle lever arm (21, 21') has a spindle drive which comprises a first spindle element that can be moved in rotation by means of a motor (29) and a second spindle element that can be displaced longitudinally relative to the first spindle element and is connected to the control lever (14) in an articulated manner.

4. Ball head coupling according to claim 3, **characterised in that** the motor (29) has a motor housing (31, 31') which is a component of the length-variable toggle lever arm (21, 21'), the toggle lever joint (23, 23') via which the first and second toggle lever arm (21, 21'; 22, 22') are interconnected being connected to the motor housing (31, 31').

5. Ball head coupling according to any of claims 2 to 4, **characterised in that** the articulation region (25, 25') between the length-variable toggle lever arm (21, 21') and the control lever (14) is formed by an elongate hole (26) provided in the length-variable toggle lever arm (21, 21') and a hinge pin (34) provided on the control lever (14), which pin extends through the elongate hole (26) and can be slid along the elongate hole (26).

6. Ball head coupling according to any of the preceding claims, **characterised in that** one of the two toggle lever arms (21, 21'; 22, 22') is integral with the hand lever (3, 3') or is rigidly connected thereto.

7. Ball head coupling according to any of claims 1 to 5, **characterised in that** the hand lever (3) can be pivoted about the same articulation axis (27) as the length-variable toggle lever arm (21).

8. Ball head coupling according to any of the preceding claims, **characterised in that** a safety device is provided which can be operated single-handedly together with the hand lever (3, 3') in order to prevent a pivoting movement of the hand lever (3, 3') out of a partially opened intermediate position in which the ball head coupling (1, 1') is unstressed and the coupling element (9) is still held in a closed position and into an open position in which the coupling element (9) is opened.

9. Ball head coupling according to claim 8, **characterised in that** the safety device has a stop (39') arranged on the hand lever (3'), which stop in the intermediate position strikes a counter stop (49') that is fixed to the housing, it being possible, by moving the hand lever (3') relative to the counter stop (49'), to bring the stop (39') of the hand lever (3') out of blocking engagement with the counter stop (49') in such a way that the hand lever (3') can be pivoted into the fully opened position thereof.

10. Ball head coupling according to claim 8, **characterised in that** the safety device consists of a blocking device that acts between the control lever (14) and the hand lever (3), the stop (39a, 39b) arranged on the hand lever (3) striking the control lever (14) in the intermediate position in such a way that a further angular adjustment between the hand lever (3) and the control lever (14) in the direction of the open position is blocked.

11. Ball head coupling according to any of the preceding claims, **characterised in that** the motorised clamp device (20, 20') is connected to a control device for automatically controlling the clamping of the coupling element (9) according to the rolling susceptibility, speed and/or axle load.

## Revendications

1. Attelage à rotule pour remorques de véhicule, comportant
- un boîtier d'attelage (2),
- un élément d'attelage (9) qui est monté de façon mobile dans le boîtier d'attelage (2) et qui est réalisé pour maintenir l'attelage à rotule (1, 1') sur la rotule,
- un levier de commande (14) coopérant avec l'élément d'attelage (9) et destiné à verrouiller l'élément d'attelage (9) dans une première position de fermeture, le levier de commande (14) étant monté de façon mobile en basculement sur le boîtier d'attelage (2),
- un ensemble de levier à genouillère (19, 19') destiné à actionner le levier de commande (14), l'ensemble de levier à genouillère (19, 19') comprenant un premier bras de levier à genouillère (21, 21') qui est relié en articulation au levier de commande (14), et un second bras de levier à genouillère (22, 22') qui est supporté en articulation sur le boîtier d'attelage (2) ou sur une partie solidaire de celui-ci,
- un levier à main (3, 3') destiné à actionner l'ensemble de levier à genouillère (19, 19'),
**caractérisé en ce que**
l'attelage à rotule (1, 1') comprend un moyen de serrage (20, 20') motorisé intégré dans l'ensemble de levier à genouillère (19, 19') pour serrer l'attelage à rotule (1, 1').

2. Attelage à rotule selon la revendication 1, **caractérisé en ce que** l'un des deux bras de levier à genouillère (21, 21' ; 22, 22') est réglable en longueur à l'aide du moyen de serrage motorisé (20, 20'), de telle sorte que la distance entre une articulation à levier à genouillère (23, 23') par laquelle le premier et le second bras de levier à genouillère (21, 21' ; 22, 22') sont reliés l'un à l'autre, et une zone d'articulation (25, 25' ; 56) dans laquelle le premier bras de levier à genouillère (21, 21') est relié au levier de commande (14) ou le second bras de levier à genouillère (22, 22') est relié au boîtier d'attelage (2) ou à la partie solidaire de celui-ci, est variable par voie motorisée.

3. Attelage à rotule selon la revendication 2, **caractérisé en ce que** le bras de levier à genouillère (21, 21') variable en longueur comprend un entraînement à broche qui comprend un premier élément de broche susceptible d'être mis en rotation à l'aide d'un moteur (29), et un second élément de broche mobile en translation longitudinale par rapport au premier élément de broche, qui est relié en articulation au levier de commande (14).

4. Attelage à rotule selon la revendication 3, **caractérisé en ce que** le moteur (29) comprend un carter de moteur (31, 31') qui fait partie du bras de levier à genouillère (21, 21') variable en longueur, l'articulation à levier à genouillère (23, 23') par lequel le premier et le second bras de levier à genouillère (21, 21' ; 22, 22') sont reliés l'un à l'autre est relié au carter de moteur (31, 31').

5. Attelage à rotule selon l'une des revendications 2 à 4, **caractérisé en ce que** la zone d'articulation (25, 25') entre le bras de levier à genouillère (21, 21') variable en longueur et le levier de commande (14) est formée par un trou oblong (26) prévu dans le bras de levier à genouillère (21, 21') variable en longueur et par un goujon d'articulation (34) prévu sur le levier de commande (34) et traversant le trou oblong (26) et mobile en translation le long du trou oblong (26).

6. Attelage à rotule selon l'une des revendications précédentes, **caractérisé en ce que** l'un des deux bras de levier à genouillère (21, 21' ; 22, 22') est réalisé d'un seul tenant avec le levier à main (3, 3') ou est solidaire de celui-ci.

7. Attelage à rotule selon l'une des revendications 1 à 5, **caractérisé en ce que** le levier à main (3) est mobile en basculement autour du même axe d'articulation (27) que le bras de levier à genouillère (21) variable en longueur.

8. Attelage à rotule selon l'une des revendications précédentes, **caractérisé en ce qu'**il est prévu un moyen de sécurisation actionnable d'une seule main conjointement avec le levier à main (3, 3') et destiné à empêcher un mouvement de basculement du levier à main (3, 3') hors d'une position intermédiaire partiellement ouverte dans laquelle l'attelage à rotule (1, 1') est détendu et l'élément d'attelage (9) est encore retenu dans une position de fermeture, jusque dans une position d'ouverture dans laquelle l'élément d'attelage (9) est ouvert.

9. Attelage à rotule selon la revendication 8, **caractérisé en ce que** le moyen de sécurisation comprend une butée (39') agencée sur le levier à main (3') et venant en butée contre une butée complémentaire (49') solidaire du boîtier dans la position intermédiaire, la butée (39') du levier à main (3') étant susceptible d'être dégagée de son engagement avec la butée complémentaire (49') par une translation du levier à main (3') par rapport à la butée complémentaire (49'), de telle sorte que le levier à main (3') est susceptible de basculer dans sa position complètement ouverte.

10. Attelage à rotule selon la revendication 8, **caractérisé en ce que** le moyen de sécurisation est constitué d'un moyen de blocage agissant entre le levier de commande (14) et le levier à main (3), la butée (39a, 39b) agencée sur le levier à main (3) dans la position intermédiaire venant buter contre le levier de commande (14) d'une façon telle qu'un autre déplacement angulaire entre le levier à main (3) et le levier de commande (14) en direction de la position d'ouverture est bloqué.

11. Attelage à rotule selon l'une des revendications précédentes, **caractérisé en ce que** le moyen de serrage motorisé (20, 20') est relié à un moyen de commande pour commander automatiquement le serrage de l'élément d'attelage (9) en fonction de la tendance au lacet, de la vitesse et/ou de la charge sur l'essieu.
